# EUROPÄISCHE PATENTSCHRIFT

(11) **EP 1 384 606 B1**
(45) Veröffentlichungstag und Bekanntmachung des Hinweises auf die Patenterteilung: **26.04.2006**
(21) Anmeldenummer: 03015332.4
(22) Anmeldetag: 07.07.2003
(51) Int. Cl.: B60H 1/00, B60H 1/24, F04D 27/02

(54) **Gebläseanordnung und Verfahren zur Belüftung eines Fahrzeugs**
Blower unit and method for ventilating a vehicle
Dispositif et procédé d' aeration pour un véhicule

(30) Priorität: 25.07.2002 DE 10233998; 26.07.2002 DE 10234345
(43) Veröffentlichungstag der Anmeldung: 28.01.2004
(73) Patentinhaber: Behr GmbH & Co. KG, 70469 Stuttgart (DE)
(72) Erfinder: Fischle, Jochen, Dipl.-Ing., 07400-0000 Aruja-SP (BR); Grömmer, Christian, Dipl.-Ing., 88719 Stetten (DE); Kilian, Jörg, Dipl.-Ing., 71272 Renningen (DE); Komarek, Eugen, Dipl.-Ing., 69126 Heidelberg (DE)

(56) Entgegenhaltungen:
- EP-A- 1 188 930
- DE-A- 3 234 006
- DE-A- 10 029 546
- DE-C- 10 002 951
- PATENT ABSTRACTS OF JAPAN vol. 005, no. 061 (M-065), 24. April 1981 (1981-04-24) & JP 56 013213 A (NIPPON DENSO CO LTD), 9. Februar 1981 (1981-02-09)

## Beschreibung

Die Erfindung betrifft eine Gebläseanordnung zur Belüftung eines Fahrzeugs, insbesondere eines Innenraumes eines Fahrzeugs. Des Weiteren betrifft die Erfindung ein Verfahren zur Belüftung eines Fahrzeugs.

Üblicherweise wird zur Beheizung und/oder Belüftung eines Fahrzeugs eine Heiz- und/oder Klimaanlage verwendet, über welche aus einer im Fahrzeuginnenraum liegenden oder von aussen gespeisten Ansaugöffnung Luft über Kanäle in den Fahrzeuginnenraum gefördert wird. Zur Erhöhung eines daraus resultierenden Luftmassenstromes im Fahrzeuginnenraum, insbesondere im Fondbereich, wird häufig in Ausblaskanälen eine als Fondgebläse bezeichnete Gebläseanordnung eingesetzt. Bedingt durch entlang von Fahrzeuglängsseiten getrennt verlaufende, linksseitige und rechtsseitige Fondkanäle zur Belüftung des Fondbereiches umfasst die Gebläseanordnung zwei Gebläse, auch Doppelgebläse genannt. Diese werden üblicherweise durch getrennte Motoren angetrieben. Hierdurch kommt es zu einer hohen Geräuschentwicklung, welche sich nachteilig auf den Fahrkomfort auswirkt und darüber hinaus besonders kostenaufwändig ist. Alternativ kann das Doppelgebläse nur über einen einzelnen Gebläsemotor angetrieben werden. Hierbei kommt es im Falle, dass eine im Fondkanal vorgesehene Absperrklappe geschlossen ist, zu einem in dem betreffenden Gebläse besonders hohen Gegendruck, welcher Nahe am maximalen Betriebspunkt heranreicht und sich ebenfalls akustisch nachteilig auf den Fahrkomfort auswirkt.

DE-C-100 02 951 offenbart eine Gebläseanordnung gemäß dem Oberbegriff des Anspruchs 1.

Der Erfindung liegt daher die Aufgabe zugrunde, eine Gebläseanordnung zur Belüftung eines Fahrzeugs anzugeben, welche gegenüber dem genannten Stand der Technik mit deutlich vereinfachten Aufwand und verbesserter akustischer Eigenschaft ausgestattet ist. Des Weiteren ist ein zur Belüftung des Fahrzeugs besonders geeignetes Verfahren anzugeben.

Die Aufgabe bezüglich der Gebläseanordnung wird erfindungsgemäß gelöst durch ein mittels eines Elektromotors angetriebenes Doppelgebläse, welches eingangsseitig mit mindestens einem Ansaugkanal und ausgangsseitig mit mindestens zwei Ausblaskanälen verbunden ist, wobei mindestens ein Ausblaskanal ein Umführungselement aufweist, über welches der entsprechende Ausblaskanal mit mindestens einem Ansaugkanal zustandsabhängig verbunden ist., und die Stellung des Unführungselements in Abhängigkeit einer über die Ausblaskanäle eingestellten Drosselung der Belüftung verändert wird.

Die Erfindung geht dabei von der Überlegung aus, dass die Gebläseanordnung mit zwei Gebläsen für einen mehrflutigen Betrieb anstelle eines zweimotorigen Antriebs einmotorig angetrieben werden sollte, um Motorengeräusche entsprechend zu reduzieren. Bei einer vorteilhaften Ausführungsform sind zwei von einander getrennt ausgeführte Ansaugkanäle und zwei von einander getrennt ausgeführte Ausblaskanäle vorhanden, wobei jeweils ein Ausblaskanal über jeweils ein Umführüngselement mit einem Ansaugkanal zustandsabhängig verbunden ist. Die beiden Gebläse sind dabei mehrflutig, beispielsweise zweiflutig, d. h. jedes der beiden Gebläse ist einflutig ausgebildet oder dreiflutig, d. h. ein Gebläse ist zweiflutig und das andere einflutig ausgebildet usw.. Unter Flutigkeit wird dabei bei Radialgebläsen die Anzahl der Ansaugwege verstanden.

Erfindungsgemäß sollten durch verschiedene Lüftungseinstellungen im Fahrzeuginnenraum bedingte Geräusche ebenfalls reduziert sein, wobei gleichzeitig eine möglichst individuell einstellbare Luftstromverteilung im Fahrzeuginnenraum ermöglicht sein sollte. Hierzu ist im Ausblaskanal ein Umführungselement vorgesehen, welches zustandsabhängig den Ausblaskanal mit dem Ansaugkanal verbindet. Dabei wird in Abhängigkeit vom Drosselungsgrad der Luftstromverteilung im Fahrzeuginnenraum das Umführungselement entsprechend eingestellt.

Je nach Art und Ausführung der Gebläseanordnung wird das Doppelgebläse bevorzugt über mindestens zwei voneinander getrennten Ansaugkanälen gespeist. Alternativ kann das Doppelgebläse über eine große Kammer (auch Kammerkanal genannt) oder über zwei teilweise verbundene Kanäle gespeist werden. Dies ist insbesondere aufgrund des nur begrenzt zur Verfügung stehenden Bauraumes vorteilhaft. Für eine gleichmäßige Belüftung des gesamten lnnenraums über verteilt angeordnete Belüftungsdüsen ist zweckmäßigerweise das Doppelgebläse ausgangsseitig mit mindestens zwei voneinander getrennten Ausblaskanälen verbunden. Dabei weist jeder Ausblaskanal ein zugehöriges Umführungselement auf, über welches der betreffende Ausblaskanal mit dem zugehörigen Ansaugkanal zustandsabhängig verbunden ist. Für eine gleichmäßige Verteilung des mittels der Gebläseanordnung erzeugten Luftmassenstroms sind die Ausblaskanäle zweckmäßigerweise getrennt voneinander ausgebildet. Hierdurch ist eine getrennte Führung und eine besonders gute Verteilung des Luftstroms im Fahrzeuginnenraum möglich. Für eine Belüftung des Fahrzeuginnenraumes auch im hinteren Bereich bei einer häufig im Frontbereich angeordneten Gebläseanordnung sind die Ausblaskanäle zur Belüftung von längsseitig im Fahrzeug verlaufenden Fondkanälen vorgesehen.

Für eine besonders einfache und einstellbare Umführung der Belüftungsluft bei Absperrung eines der Fondkanäle ist das Umführungselement zweckmäßigerweise als Absperrklappe ausgebildet. Mittels einer derartigen, einstellbaren Absperrklappe ist ein Volumenstrom zwischen 0% bis 100% einstellbar. Zweckmäßigerweise ist der jeweilige Ausblaskanal mit einer in einen Umführungskanal mündenden Öffnung versehen. Mit anderen Worten: Die Ausblaskanäle weisen druckseitig vor dem Umführungselement zusätzliche Öffnungen auf, die Lufteintritte in einen Umführungs- oder Bypasskanal bilden. Das Umführungselement ist dabei derart angeordnet, dass es in seinen Endpositionen zum einen die Öffnung zum Bypasskanal vollständig verschließt bei gleichzeitig vollständig geöffneten Ausblaskanal und zum anderen den Ausblaskanal vollständig verschließt bei gleichzeitig vollständig geöffneter Öffnung zum Bypasskanal. D.h. die Öffnung zum Bypasskanal ist um so weiter geöffnet, je weiter der Austritt zum Ausblaskanal durch das Umführungselement geschlossen ist.

Vorteilhafterweise mündet der jeweilige Umführungskanal in den zugehörigen Ansaugkanal. Hierdurch ist ein einseitiger Umlaufbetrieb oder auch ein Kurzschlußbetrieb ermöglicht, welcher mit einem einstellbaren Luftstrom entsprechend definiert geführt, insbesondere zurückgeführt werden kann, wodurch die erforderliche Ausblasleistung in den jeweiligen Ausblaskanal reduziert wird.

Die bezüglich des Verfahrens zur Belüftung des Fahrzeuges genannte Aufgabe wird erfindungsgemäß gelöst, indem ein mittels eines Motors angetriebenes Doppelgebläse eingangsseitig über einen Ansaugkanal mit einem Ansaugstrom bespeist wird, welcher ausgangsseitig in einen Ausblasstrom geführt wird, wobei zustandsabhängig mittels eines Umführungselements der Ausblasstrom als Umlaufstrom dem Ansaugstrom wieder zugeführt wird. Für eine möglichst individuell einstellbare Belüftung des Fahrzeuginnenraumes wird der Ausblasstrom anteilig zurückgeführt. Je nach Stellung einer im Fahrzeuginnenraum einstellbaren Belüftungsdüse wird mittels des Umführungselement ein entsprechender Anteil des Ausblasstrom dem Ausblaskanal und somit dem Fondkanal zugeführt und der andere Teil dem Bypasskanal und somit dem Ansaugstrom wieder zugeführt. Für eine individuelle Aufteilung des Luftmassenstromes im Fahrzeuginnenraum wird der Ausblasstrom mittels mindestens zweier, insbesondere getrennt verlaufender Ausblaskanäle geteilt und dem Fahrzeuginnenraum über verschiedene Stellen z.B. im Fondbereich oder Fußraumbereich zugeführt. Hierdurch ist eine besonders angenehme Klimatisierung des Fahrzeuginnenraums möglich.

ln einer bevorzugten Ausführungsform wird der Ausblasstrom kanalabhängig geführt und/oder zurückgeführt. Mit anderen Worten: Der Ausblasstrom wird geteilt und getrennt voneinander beispielsweise in längsseitig im Fahrzeug verlaufende Fondkanäle geführt und je nach Stellung der Belüftungsdüse und der daraus resultierenden Stellung des Umführungselementes je Kanal auch ggf. anteilig dem Ansaugstrom zugeführt. Somit ist neben einer besonders komfortablen Klimatisierung auch eine hinreichend gute Geräuschreduktion gegeben.

Die mit der Erfindung erzielten Vorteile bestehen insbesondere darin, dass durch eine mittels eines Umführungselements zustandsabhängig einstellbare Verbindung zwischen einem Ausblaskanal und einem Ansaugkanal ein Umlaufbetrieb, insbesondere im Falle einer geschlossenen Belüftungsklappe im Ausblaskanal möglich ist. Darüber hinaus ist die durch ein Doppelgebläse zweiflutig ausgebildete Gebläseanordnung für eine strikte längsseitige Trennung des Luftmassenstroms in zwei Teilströme ausgelegt, wodurch eine links-rechts getrennte Temperierung ermöglicht ist, die eine Komfortsteigerung bedeutet. Des Weiteren weist die Gebläseanordnung einen einzelnen Gebläsemotor zum Antrieb des Doppelgebläses auf. Dies führt zum einen zu einer Reduzierung der Motorgeräusche und zum anderen in Kombination mit dem mittels des Umführungselements bewirkenden Umlaufbetrieb zur Reduzierung eines bei Absperrung des Ausblaskanals verursachten Gegendrucks und somit zu einer weiteren Reduzierung von akustischen Geräuschen.

Der wesentliche Vorteil des einseitigen Kurzschlussbetriebes ist, dass sich der Betriebzustand des einzigen Motors und die Luftmenge der jeweils anderen Seite nicht spürbar ändern. Somit kann die eine Seite gedrosselt werden, während die andere Seite akustisch, temperatur- und luftmengenmäßig unbeeindruckt bleibt, obwohl nur ein einziger Motor verwendet wird. Es werden also Kosten (Motor/Infrastruktur) und Bauraum gespart ohne eine Funktionseinbuße hinnehmen zu müssen.

Ausführungsbeispiele der Erfindung werden anhand einer Zeichnung näher erläutert. Darin zeigen:
- Fig. 1: schematisch eine Gebläseanordnung mit einem durch einen Motor angetriebenen Doppelgebläse in perspektivischer Darstellung,
- Fig. 2: schematisch einen Querschnitt durch die Gebläseanordnung nach Figur 1,
- Fig. 3: schematisch einen Längsschnitt durch die Gebläseanordnung nach Figur 1 mit geschlossenem Umführungselement, und
- Fig. 4: schematisch einen Längsschnitt durch die Gebläseanordnung nach Figur 1 mit offenem Umführungselement

Einander entsprechende Teile sind in allen Figuren mit den gleichen Bezugszeichen versehen.

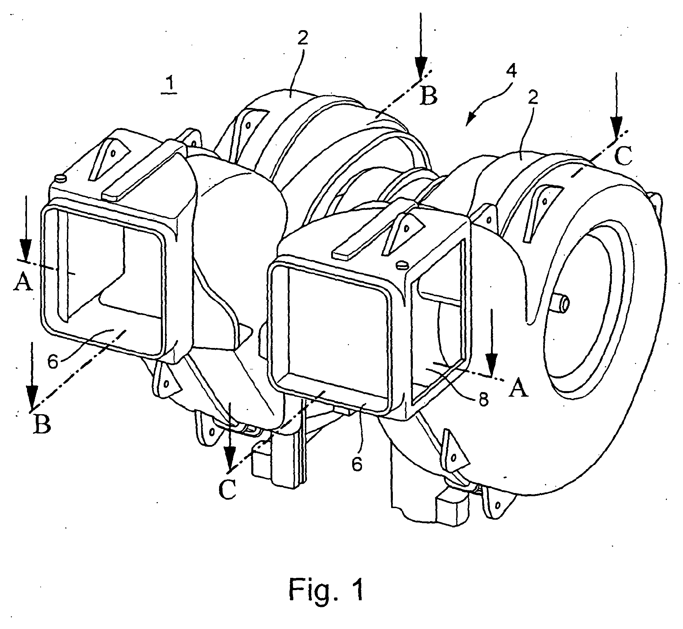

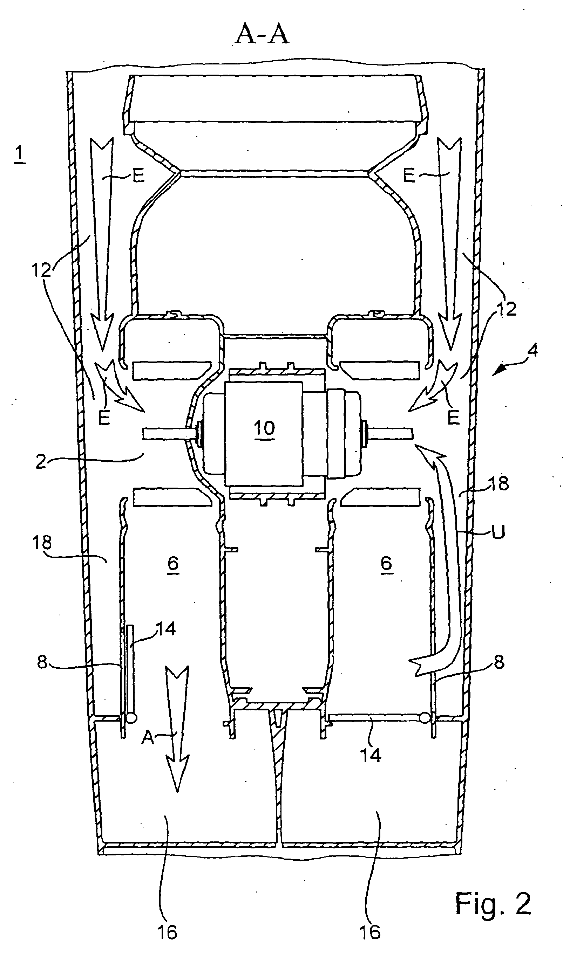

Figur 1 zeigt eine Gebläseanordnung 1 mit einem aus zwei Gebläse 2 gebildeten Doppelgebläse 4, welches ausgangsseitig zwei voneinander getrennte Ausblaskanälen 6 aufweist. Je nach Art und Ausführung der Gebläseanordnung 1 kann diese auch einkanalig, d.h. einen einzigen Ausblaskanal 6 aufweisen. Der jeweilige Ausblaskanal 6 weist druckseitig eine Öffnung 8 auf. In Figur 2 ist die Gebläseanordnung 1 im Querschnitt dargestellt. Das Doppelgebläse 4 wird mittels eines Elektromotors 10 angetrieben. Dabei werden beide Gebläse 2 über einen gemeinsamen Elektromotor 10 angetrieben.

Zur Erzeugung eines einstellbaren Luftstromes ist das Doppelgebläse 4 eingangsseitig mit zwei voneinander getrennten Ansaugkanälen 12 verbunden. Alternativ kann das Doppelgebläse 4 über einen einzigen Ansaugkanal 12 gespeist werden.

Der jeweilige Ansaugkanal 12 dient der Speisung eines der beiden Gebläse 2 mit einem zugehörigen Ansaugstrom E. Ausgangsseitig ist das Doppelgebläse 4 mit den Ausblaskanälen 6 verbunden. Bevorzugt dienen die beiden Ausblaskanäle 6 einer getrennten Bespeisung des Fahrzeuginnenraums mit warmer und/oder kalter Luft über getrennte Luftmassenströme. Hierzu münden die Ausblaskanäle 6 in Fondkanäle 16, welche beispielsweise längsseitig im Fahrzeug verlaufen.

Zur Einstellung eines über den jeweiligen Ausblaskanal 6 strömenden Ausblasstrom A weist der betreffende Ausblaskanal 6 ein Umführungselement 14 auf. Das Umführungselement 14 ist beispielsweise als Absperrelement, insbesondere als einstellbare Absperrklappe ausgebildet. Je nach Stellung des Umführungselements 14 wird ein entsprechender Ausblasstrom A in den an den jeweiligen Ausblaskanal 6 anschließenden Fondkanal 16 geführt. Dabei wird die Stellung des Umführungselements 14 in Abhängigkeit von einer im Innenraum des Fahrzeugs eingestellten Drosselung der Belüftung, z.B. über eine nicht näher dargestellte Belüftungsdüse verändert. D.h. wird beispielsweise durch einen Insassen im Fahrzeug die Belüftung des linksseitigen Fondbereich vollständig durch Öffnen der Belüftungsdüse geöffnet und im rechtsseitigen Fondbereich die Belüftungsdüse vollständig geschlossen, so ergibt sich die in Figur 2 dargestellte Stellung der Umführungselemente 14 mit einer in Richtung des einen Fondkanals 16 vollständig offenen Stellung und mit einer in Richtung des anderen Fondkanals 16 vonständig geschlossenen Stellung des betreffenden Umführungselements 14.

D.h. das Umführungselement 14 ist zwischen zwei Endpositionen einstellbar, wobei in Abhängigkeit vom Drosselungsgrad der Belüftung im Innenraum jede beliebige Zwischenstellung einstellbar ist. Zur Vermeidung eines bei einer vollständigen Schließung des Ausblaskanals 6 in Richtung des Fondkanals 16 auftretenden Gegendrucks ist das Umführungselement 14 derart angeordnet, dass es bei einer Drosselung des in den Fondkanal 16 strömenden Ausblasstroms A die druckseitig im Ausblaskanal 6 angeordnete Öffnung 8 entsprechend freigibt und öffnet. Die Öffnung 8 des jeweiligen Ausblaskanals 6 ist dabei strömungsseitig vor dem Umführungselement 14 angeordnet und mündet in einen Umführungskanal 18. Der Umführungskanal 18 führt in der Art eines Bypass oder einer Schleife wieder in den Ansaugkanal 12 zurück. Somit wird bei einer Drosselung des in den Fahrzeuginnenraums geführten Ausblasstroms A ein entsprechender Anteil als Umlaufstrom U über den Bypass- oder Umführungskanal 18 in den Ansaugstrom E zurückgeführt. Mit anderen Worten: Je nach Stellung des.jeweiligen Umführungselements 14, auch Bypass-Klappe genannt, wird kanalabhängig die Öffnung 8 um so weiter geöffnet, je weiter der Auslauf in den Fondkanal 16 geschlossen ist.

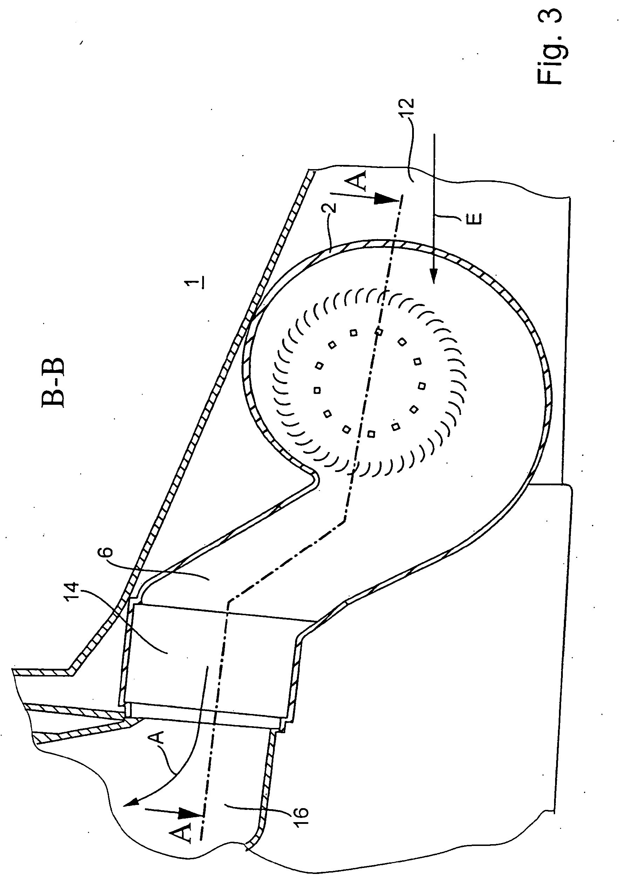

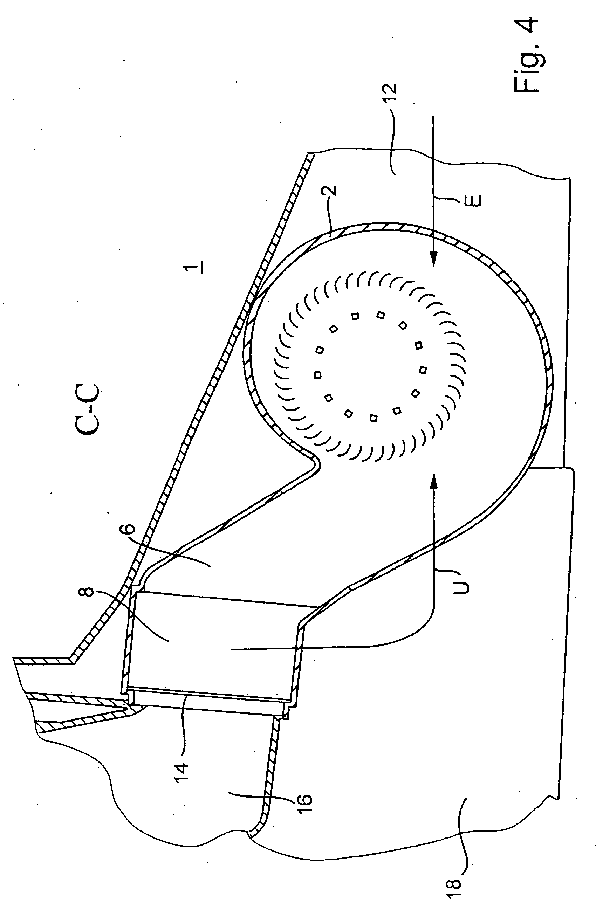

In Figur 3 ist die Gebläseanordnung 1 im Längsschnitt durch den vollständig geöffneten Ausblaskanal 6 und Fondkanal 16 dargestellt. Dabei wird das betreffende Gebläse 2 mit dem Ansaugstrom E vom Ansaugkanal 12 gespeist. Druckseitig wird der Ausblasstrom A über das die Öffnung 8 verschließende Umführungselement 14 dem offenen Fondkanal 16 zugeführt (= Normalbetrieb der Gebläseanordnung 1). In Figur 4 ist die Gebläseanordnung 1 im Längsschnitt durch den vollständig geschlossenen Ausblaskanal 6 und Fondkanal 16 dargestellt. Dabei verschließt das Umführungselement 14 in seiner Endposition den Fondkanal 16 und öffnet den Umführungskanal 18 über die Öffnung 8, so dass der Ausblasstrom A über den Bypass- oder Umführungskanal 18 dem Ansaugstrom E wieder zugeführt wird (= Umlaufbetrieb der Gebläseanordnung 1).

### Bezugszeichenliste

- 1: Gebläseanordnung
- 2: Gebläse
- 4: Doppelgebläse
- 6: Ausblaskanal
- 8: Öffnung
- 10: Elektromotor
- 12: Ansaugkanal
- 14: Umführungselement
- 16: Fondkanäle

- A: Ausblasstrom
- E: Ansaugstrom
- U: Umlaufstrom

## Patentansprüche

1. Gebläseanordnung (1) zur Belüftung eines Fahrzeugs, umfassend ein durch einen Elektromotor (10) angetriebenes Doppelgebläse (4), mindestens einen Ansaugkanal (12), der eingangsseitig mit dem Doppelgebläse (4) verbunden ist und mindestens zwei Ausblaskanäle (6), die ausgangsseitig mit dem Doppelgebläse (4) verbunden sind **dadurch gekennzeichnet, dass** mindestens einer der Ausblaskanäle ein Umführungselement (14) aufweist, über welches der betreffende Ausblaskanal (6) mit dem zugehörigen Ansaugkanal (12) zustandsabhängig verbunden ist, und die Stellung des Umführungselements (14) in Abhängigkeit einer im Innenraum des Fahrzeugs eingestellten Drosselung der Ausblaskanäle veränderbar ist.

2. Gebläseanordnung nach Anspruch 1, bei der das Doppelgebläse (4) eingangsseitig mit mindestens zwei voneinander getrennten Ansaugkanälen (12) und ausgangsseitig mit mindestens zwei voneinander getrennten Ausblaskanälen (6) verbunden ist.

3. Gebläseanordnung nach Anspruch 1 oder 2, bei der das Umführungselement (14) als Absperrklappe ausgebildet ist.

4. Gebläseanordnung nach einem der Ansprüche 1 bis 3, bei der der jeweilige Ausblaskanal (6) mit einer in einen Umführungskanal (18) mündenden Öffnung (8) versehen ist.

5. Gebläseanordnung nach einem der Ansprüche 1 bis 4, bei der der jeweilige Umführungskanal (18) in den zugehörigen Ansaugkanal (12) mündet.

6. Gebläseanordnung nach einem der Ansprüche 1 bis 5, bei der die Ausblaskanäle (6) getrennt voneinander ausgebildet sind.

7. Gebläseanordnung nach einem der vorherigen Ansprüche, bei der der Motor (10) gekapselt ausgeführt ist.

8. Gebläseanordnung nach einem der vorherigen Ansprüche, bei der eine Gebläsesteuereinrichtung zur Steuerung und/oder Regelung der Drehzahl des Gebläses vorhanden ist.

9. Gebläseanordnung nach Anspruch 8, bei der die Gebläsesteuereinrichtung innerhalb der Motorkapselung angeordnet ist.

10. Gebläseanordnung nach einem der vorherigen Ansprüche, bei der die einzelnen Gebläse des Doppelgebläses einflutig und/oder mehrflutig ausgeführt sind.

11. Gebläseanordnung nach einem der vorherigen Ansprüche, bei der ein Teil des Luftmassenstroms in die Motorkapselung zur Kühlung des Motors und/oder der Steuereinheit geleitet wird.

12. Gebläseanordnung nach einem der vorherigen Ansprüche, bei der die Laufradnaben eines zweiflutig ausgeführten Gebläses des Doppelgebläses mit Durchbrüchen versehen sind.

13. Fahrzeug mit einer Gebläseanordnung nach einem der vorherigen Ansprüche, mit längsseitig im Fahrzeug verlaufenden Fondkanälen (16), wobei die Ausblaskanäle (6) zur Belüftung der längsseitig im Fahrzeug verlaufenden Fondkanäle (16) vorgesehen sind.

14. Verfahren zur Belüftung eines Fahrzeuges, insbesondere eines Innenraumes eines Fahrzeuges, bei welchem ein mittels eines Motors (10) angetriebenes Doppelgebläse (4) eingangsseitig über einen Ansaugkanal (12) mit einem Ansaugstrom (E) bespeist wird, welcher ausgangsseitig in einen Ausblasstrom (A) geführt wird, **dadurch gekennzeichnet dass** zustandsabhängig mittels eines Umführungselements (14) der Ausblasstrom (A) als Umlaufstrom (U) dem Ansaugstrom (E) wieder zugeführt wird, und die Stellung des Umführungselements (14) in Abhängigkeit von einer im Innenraum des Fahrzeugs eingestellten Drosselung der Belüftung verändert wird.

15. Verfahren nach Anspruch 14, bei dem der Ausblasstrom (A) anteilig zurückgeführt wird.

16. Verfahren nach Anspruch 14 oder 15, bei dem der Ausblasstrom (A) kanalabhängig zurückgeführt wird.

## Claims

1. Fan arrangement (1), for ventilating a vehicle, comprising a double fan (4) driven by means of an electromotor (10), at least one suction duct (12) that is connected on one side to the double fan (4), and at least two outflow ducts (6) that are connected, on the outlet side, to the double fan (4), **characterized in that** one of the outflow ducts has a return element (14) by means of which the relevant outflow duct (6) is, depending on the given status of the arrangement, connected to the associated suction duct (12), and the position of the return element (14) can be changed on the basis of throttling of the outflow duct inside the vehicle.

2. Fan arrangement in accordance with claim 1, in which the double fan (4) is connected, on the intake side, to at least two separate suction ducts (12) and, on the outlet side, to at least two separate outflow ducts (6).

3. Fan arrangement in accordance with claims 1 or 2, in which the return element (14) is developed as a throttle valve.

4. Fan arrangement in accordance with one of claims 1 to 3, in which the given outflow duct (6) is provided with an opening (8) that opens into a return channel (18).

5. Fan arrangement in accordance with one of claims 1 to 4, in which the given return channel (18) opens into the associated suction duct (12).

6. Fan arrangement in accordance with one of claims 1 to 5, in which the outflow ducts (6) are separated from each other.

7. Fan arrangement in accordance with one of the preceding claims, in which the motor (10) is enclosed.

8. Fan arrangement in accordance with one of the preceding claims, in which there is a fan control device for controlling and/or adjusting the rotational speed of the fan.

9. Fan arrangement in accordance with claim 8, in which the fan-control device is disposed inside the motor encasement.

10. Fan arrangement in accordance with one of the preceding claims, in which the separate fans of the double fan are mono- and/or multi-flow.

11. Fan arrangement in accordance with one of the preceding claims, in which a part of the air mass flow is directed into the motor casing in order to cool the motor and/or the control unit.

12. Fan arrangement in accordance with one of the preceding claims, in which the impeller hub of a fan, implemented to allow two flow modes, of the double fan, is provided with openings.

13. Vehicle with a fan arrangement in accordance with one of the preceding claims, with background channels (16) running lengthwise in the vehicle, whereby the outflow ducts (6) are provided for ventilating the background channels (16) running lengthwise in the vehicle.

14. Process for ventilating a vehicle, particularly the interior of a vehicle, in which a double fan (4) driven by means of a motor (10) is fed on one side by means of a suction duct (12) with a suction flow (E) that, on the outflow side, is directed into an outflow (A), **characterized in that**, depending on the status of the process, the outflow (A) is, by means of a return element (14), re-supplied to the suction flow (E) as a return flow (U), and the position of the return element (14) is changed on the basis of throttling of the ventilation adjusted inside the vehicle.

15. Process in accordance with claim 14, in which a component of the outflow (A) is returned.

16. Process in accordance with claim 14 or 15, in which the outflow (A) is returned depending on the given channel.

## Revendications

1. Agencement de ventilateurs (1) pour la ventilation d'un véhicule, comprenant un double ventilateur (4) entraîné par un moteur électrique (10), au moins un conduit d'aspiration (12) qui est raccordé, côté entrée, au double ventilateur (4), et au moins deux conduits d'évacuation (6) qui sont raccordés, côté sortie, au double ventilateur (4),
**caractérisé en ce que** au moins l'un des conduits d'évacuation présente un élément de dérivation (14) par lequel le conduit d'évacuation concerné (6) est, en fonction des conditions, raccordé au conduit d'aspiration associé (12), et la position de l'élément de dérivation (14) peut être modifiée en fonction d'un étranglement des conduits d'évacuation, réglé dans l'habitacle du véhicule.

2. Agencement de ventilateurs selon la revendication 1, dans lequel le double ventilateur (4) est raccordé, côté entrée, à au moins deux conduits d'aspiration (12) séparés l'un de l'autre et, côté sortie, à au moins deux conduits d'évacuation (6) séparés l'un de l'autre.

3. Agencement de ventilateurs selon la revendication 1 ou 2, dans lequel l'élément de dérivation (14) est conçu comme une soupape d'arrêt.

4. Agencement de ventilateurs selon l'une quelconque des revendications 1 à 3, dans lequel le conduit d'évacuation respectif (6) est doté d'une ouverture (8) débouchant dans un conduit de dérivation (18).

5. Agencement de ventilateurs selon l'une quelconque des revendications 1 à 4, dans lequel le conduit de dérivation respectif (18) débouche dans le conduit d'aspiration associé (12).

6. Agencement de ventilateurs selon l'une quelconque des revendications 1 à 5, dans lequel les conduits d'évacuation (6) sont conçus en étant séparés les uns des autres.

7. Agencement de ventilateurs selon l'une quelconque des revendications précédentes, dans lequel le moteur (10) est conçu en étant blindé.

8. Agencement de ventilateurs selon l'une quelconque des revendications précédentes, dans lequel il est prévu un dispositif de commande des ventilateurs servant à commander et/ou à réguler la vitesse du ventilateur.

9. Agencement de ventilateurs selon la revendication 8, dans lequel le dispositif de commande des ventilateurs est disposé à l'intérieur du blindage du moteur.

10. Agencement de ventilateurs selon l'une quelconque des revendications précédentes, dans lequel les différents ventilateurs du double ventilateur sont conçus à un seul flux et/ou à flux multiples.

11. Agencement de ventilateurs selon l'une quelconque des revendications précédentes, dans lequel une partie du flux de la masse d'air est dirigée dans le blindage du moteur, pour le refroidissement du moteur et/ou de l'unité de commande.

12. Agencement de ventilateurs selon l'une quelconque des revendications précédentes, dans lequel les moyeux de rotor de l'un des ventilateurs - conçu à deux flux - du double ventilateur sont dotés de petites ouvertures.

13. Véhicule comprenant un agencement de ventilateurs selon l'une quelconque des revendications précédentes, comprenant des conduits arrière (16) s'étendant, dans le véhicule, le long du grand côté, où les conduits d'évacuation (6) sont prévus pour la ventilation des conduits arrière (16) s'étendant, dans le véhicule, le long du grand côté.

14. Procédé de ventilation d'un véhicule, en particulier de l'habitacle d'un véhicule, procédé dans lequel un double ventilateur (4) entraîné au moyen d'un moteur (10) est alimenté, côté entrée, via un conduit d'aspiration (12), par un flux d'aspiration (E) qui, côté sortie, est introduit dans un flux d'évacuation (A),
**caractérisé en ce que**, en fonction des conditions, le flux d'évacuation (A), en tant que flux de dérivation (U), est à nouveau, au moyen d'un élément de dérivation (14), fourni au flux d'aspiration (E), et la position de l'élément de dérivation (14) est modifiée en fonction d'un étranglement de la ventilation, réglé dans l'habitacle du véhicule.

15. Procédé selon la revendication 14, dans lequel le flux d'évacuation (A) est réintroduit de façon proportionnelle.

16. Procédé selon la revendication 14 ou 15, dans lequel le flux d'évacuation (A) est réintroduit en fonction du conduit.
